# EUROPÄISCHE PATENTSCHRIFT

(11) **EP 1 276 107 B1**
(45) Veröffentlichungstag und Bekanntmachung des Hinweises auf die Patenterteilung: **16.11.2005**
(21) Anmeldenummer: 02022569.4
(22) Anmeldetag: 22.05.1997
(51) Int. Cl.: G11B 23/40, B65C 11/00

(54) **Etikett für scheibenförmige Informationsträger**
Label for data carrier
Etiquette pour un support de données

(30) Priorität: 22.05.1996 DE 19620629; 11.03.1997 DE 29704279 U
(43) Veröffentlichungstag der Anmeldung: 15.01.2003
(62) Teilanmeldung aus: 97923832.6
(73) Patentinhaber: Phonosound Musikproduktions GmbH, 82239 Alling (DE)
(72) Erfinder: Fliegel, Erwin, 82239 Alling (DE)
(74) Vertreter: Söffge, Karen

(56) Entgegenhaltungen:
- EP-A- 0 418 608
- EP-A- 0 422 774
- DE-U- 29 501 513
- DE-U- 29 610 120
- DE-U- 29 615 777
- DE-U- 29 615 950
- DE-U- 29 702 498
- GB-A- 2 212 133
- GB-A- 2 290 526
- US-A- 5 316 464
- US-A- 5 340 427

## Beschreibung

Die vorliegende Erfindung befasst sich gemäß des Oberbegriffs des Hauptanspruchs mit einem Etikett für scheibenförmige Informationsträger mit einem zentralen Loch, insbesondere mit einem Etikett, das geeignet ist, mit Hilfe eines Computerprogramms und eines geeigneten Druckers beschriftet oder bemalt zu werden.

Derartige Etiketten und Einrichtungen zur Beschriftung von Etiketten sind im Stand der Technik aus der DE 296 08 885 bekannt. Das aus dieser Druckschrift bekannte ringförmige Etikett zum Beschriften von CD's ist auf einer Trägerschicht aufgebracht und wird auf dieser mittels eines geeigneten Klebers gehalten. Die Abmessungen dieses im Stand der Technik bekannten Etiketts sind so bemessen, dass die Begrenzungen des Datenträgers nicht überschritten werden, also vom Innenrand zum Außenrand des Datenträgers.

Als nachteilig an diesem bekannten ringförmigen Etikett wird es empfunden, dass für die Zentrierung des Etiketts auf der CD die mittige Klemmvorrichtung der Verpackungsschachtel der CD verwendet wird, so dass der Durchmesser des Zentrallochs des Etiketts genau 15 mm sein muss, um funktionsfähig zu sein, was sich einerseits nachteilig auf den Betrieb der CD im Laufwerk auswirkt und andererseits keine definierte Lage des Etiketts beim Herabdrücken der CD auf das Etikett bietet und somit ein konzentrisches Aufbringen des Etiketts auf die CD nicht gewährleistet ist.

Aus GB-A-2 290 526 ist ein Etikett nach dem Oberbegriff des Anspruchs 1 bekannt''.

Daher ist es Aufgabe der vorliegenden Erfindung, ein großflächiges Etikett für Compact Disks bereitzustellen, das eine optimale Nutzung der informationsfreien Oberfläche einer CD bietet und ein konzentrisches Aufbringen des Etiketts zum Zentralloch der CD gewährleistet.

Diese Aufgabe wird mit den kennzeichnenden Merkmalen des Hauptanspruchs gelöst.

Das erfindungsgemäße scheibenförmige selbstklebende Etikett mit einem zentralen Loch ist dadurch gekennzeichnet, dass der Außendurchmesser (D) des Etiketts nicht größer als D = 117 mm ist und der Innendurchmesser (d) des zentralen Lochs des Etiketts geringfügig größer als 15 mm und bis zu 44 mm ist.

Vorteilhaft ist es, dass das zu bedruckende Etikett bzw. die Etikettenfolie aus einem bestimmten hitzebeständigen, nicht schrumpfenden Material wie Polyester oder Papier gefertigt ist.

Vorteilhaft ist es ferner, dass die zu bedruckende Etikettenfolie durchsichtig und farblos ist. Für bestimmte Anwendungsfälle ist es vorteilhaft, dass die Etiketten farbig getönt und durchsichtig sind. GB -A - 2 290 526> <<Oberbegriff des Anspruchs 1>>

Für den Endverbraucher ist es besonders vorteilhaft, dass die zu bedruckenden Etikettenfolien vorgestanzt sind, so dass sich das aufzuklebende Etikett in seiner endgültigen Form mühelos von der Trägerfolie herauslösen lässt.

Ferner ist es vorteilhaft, dass das Etikett an der Unterseite eine Klebeschicht aufweist, die säurefrei ist und keine aggressiven Stoffe beinhaltet.

Die Beschriftung oder Bemalung des erfindungsgemäßen Etiketts kann auf beliebige Art und Weise vorgenommen werden, jedoch ist es vorteilhaft, das Etikett mit Hilfe eines Computerprogramms und einem geeigneten Drucker durchzuführen.

Weitere erfindungswesentliche Merkmale sind den Unteransprüchen zu entnehmen.

Im nun Folgenden wird die Erfindung anhand von Zeichnungen im Detail näher erläutert. Es zeigt
- Fig. 1:: die Draufsicht der mehrschichtigen bedruckten vorgestanzten Folie (1');
- Fig. 2:: eine schematische Seitenansicht der mehrschichtigen vorgestanzten zu bedruckenden Folie (1');
- Fig. 3:: eine schematische Seitenansicht des Informationsträgers (3) mit einer Zentrierhilfe (9) und dem aufzubringenden Etikett (1);
- Fig. 4:: eine schematische Schnittdarstellung zweier zusammengesteckter Zentrierhilfen (9, 9').

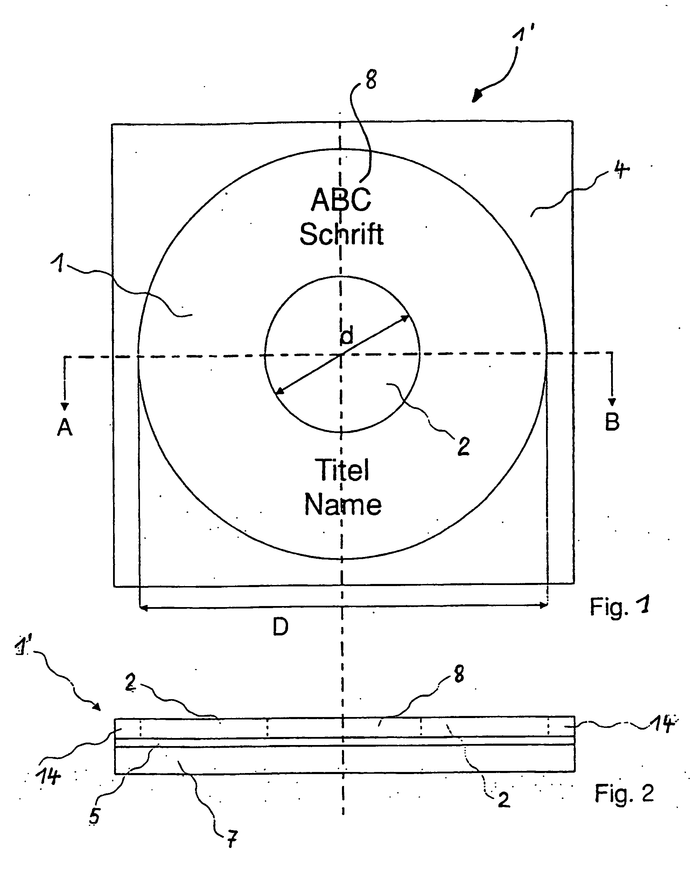

Fig. 1 zeigt die Draufsicht einer viereckigen Folie 1' mit einem vorgestanzten zu bedruckenden Etikett 1. Diese viereckige Folie 1' ist ein Teilstück, das aus einem größeren Bogen einer mehrschichtigen Folie herausgeschnitten ist. Die Kantenlängen (13 cm x 14,58 cm) der viereckigen mehrschichtigen Folie 1' sind geringfügig länger als der äußere Durchmesser (D) des zu beschriftenden Etiketts 1. Das eigentliche Etikett 1 wird in hier nicht zu beschreibenden Arbeitsgängen aus der mehrschichtigen Folie 1' in einem Vorstanzverfahren mechanisch in seinen endgültigen Abmessungen herausgestanzt, so dass das aufzuklebende Etikett 1 leicht von der Trägerfolie 7 zu lösen ist. Die Beschriftung 8 (ABC, Schrift, Name, Titel u.s.w.) bzw. die Bemalung erfolgt ebenfalls in vorangegangenen Arbeitsgängen mit Hilfe eines Computers und einem geeigneten Drucker. Das Gesamtbild, das auf die Folie bzw. das Etikett 1 zu drucken ist, wird auf dem Bildschirm eines Computers mit Hilfe eines Grafikprogramms konfiguriert. Somit ist mühelos und schnell eine individuelle Kennzeichnung des Informationsträgers 3 zu erstellen. Der äußere Durchmesser (D) des zu bedruckenden Etiketts 1 richtet sich grundsätzlich nach der Größe des zu kennzeichnenden Informationsträgers 3. Der Durchmesser (d) des zentralen Lochs 2 des Etiketts 1 ist selbstverständlich ebenfalls abhängig von der Größe des zu kennzeichnenden Informationsträgers 3. Im vorliegenden Ausführungsbeispiel beträgt der Durchmesser D = 117 mm. 117 mm sind jedoch nur der maximal zulässige Durchmesser für die gebräuchliche Größe einer Compact Disk. Je nach Wunsch und Geschmack kann der Durchmesser (D) auch kleiner als 117 mm sein. Im vorliegenden Ausführungsbeispiel ist der Durchmesser (d) des zentralen Lochs 2 d = 44,1 mm, so dass das zentrale Loch 2 ohne hängen zu bleiben über die Zentrierhilfe 9, 9' gleitet, deren zylindrischer Durchmesser 44 mm ist. Wie bereits weiter oben erwähnt wurde, sind die Durchmesser (D) und (d) variabel und liegen für (d) zwischen 15 mm und 44 mm, wobei die Extremwerte für den Außendurchmesser D = 117 mm.

In Fig. 2 ist eine schematische Schnittdarstellung entlang der Schnittlinie A-B aus Fig. 1 gezeigt. Die mehrschichtige Folie 1' besteht aus mehreren Schichten. Die untere Schicht stellt die Trägerfolie 7 dar und besteht aus einem hitzebeständigen Polyester. Zwischen der Trägerfolie 7 und der darüber befindlichen Folie des Etiketts 1 befindet sich eine Klebeschicht 5, die auf der Unterseite des Etiketts 1 haftet und für das Selbstkleben des Etiketts 1 sorgt. Der Kleber weist keine aggressiven Stoffe wie beispielsweise Säuren auf, die die Oberfläche der Compact Disk beschädigen könnten. Das Etikett 1 und das zentrale Loch 2 des Etiketts 1 wird aus der Gesamtfolie 1' mit scharfen Stanzwerkzeugen in einem nicht näher zu beschreibenden Arbeitsvorgang herausgestanzt. Die Ränder 14 der oberen Folie, aus der das Etikett 1 herausgestanzt wird, sind Abfall und werden nicht weiter verwendet. Diese Ränder 14 sind so gering wie möglich zu halten. Die vorgestanzte Folie 1' liegt somit im unbedruckten Zustand dem Endverbraucher zum Bedrucken vor.

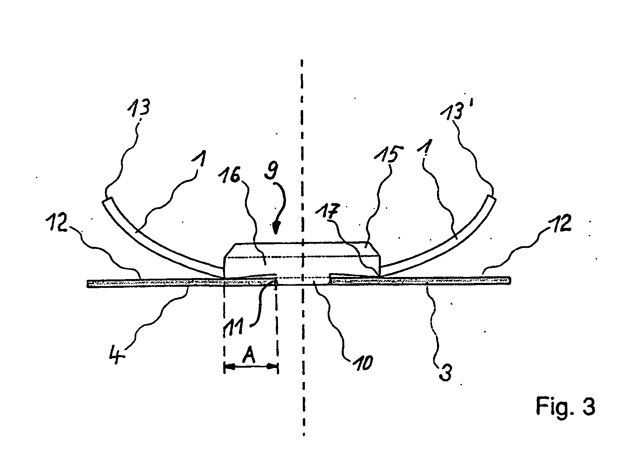

Fig. 3 zeigt die Seitenansicht eines Teils des scheibenförmigen Informationsträgers 3 mit einer im Zentralloch 11 des scheibenförmigen Informationsträgers 3 eingesetzten Zentrierhilfe 9, 9' mit deren Hilfe das Etikett 1 auf die Oberfläche der CD aufgebracht wird. Der Zapfen 10 der Zentrierhilfe 9, 9' wird passgerecht in das Zentralloch 11 des scheibenförmigen Informationsträger 3 eingesetzt, so dass der scharfkantige Rand 17 der Zentrierhilfe 9, 9' auf der Oberfläche der informationsfreien Seite 12 des Informationsträgers 3 zu liegen kommt. Nachdem der Informationsträger 1 plan auf der hier nicht gezeigten Unterlage lagert und die Zentrierhilfe 9, 9' in das Zentralloch 11 des scheibenförmigen Informationsträgers 3 eingesetzt ist, wird das Etikett 1 von der Trägerfolie 7 gelöst und an sich gegenüberliegenden Enden 13, 13' mit den Fingerspitzen erfasst und im gekrümmten Zustand mit dem zentralen Loch 2 des Etiketts 1 über die Zentrierhilfe 9, 9' geführt. Dabei ist es äußerst hilfreich, dass die Zentrierhilfe 9, 9' im oberen Teil einen konischen Abschnitt 15 aufweist und somit ein müheloses Auffinden und Zentrieren des Etiketts 1 gewährleistet.

Die hier dargestellte schematische Darstellung ist ein vergrößerter Ausschnitt im unmittelbaren Bereich des Zentrallochs 11 der CD und des zentralen Lochs 2 des Etiketts 1.

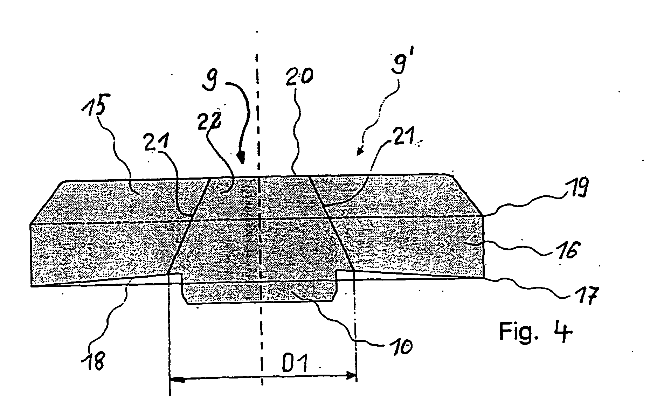

In Fig. 4 ist eine zusammengesetzte Zentrierhilfe 9, 9' in einer Schnittdarstellung gezeigt. Die zusammengesetzte Zentrierhilfe 9, 9' setzt sich aus einem kegelstumpfartigen Teil 15 und einem zylindrischen Teil 16 zusammen, wobei der kegelstumpfartige Teil 15 über dem zylindrischen Teil 16 angeordnet ist. Die Oberfläche 20 des kegelstumpfartigen Teils 15 ist vollkommen eben. Der Übergang von der ebenen Fläche 20 zu den Schenkeln des kegelstumpfartigen Teils 15 ist fließend und abgerundet. Der Übergang 19 vom kegelstumpfartigen Teil 15 zum zylindrischen Teil 16 ist dagegen scharfkantig im vorliegenden Ausführungsbeispiel. Dieser Übergang kann jedoch auch fließend ausgeführt werden. Maßgeblich für den guten Sitz der Zentrierhilfe auf der informationsfreien Seite des Informationsträgers 3 ist die scharfe Kante 17 an der unteren Seite des zylindrischen Teils 16. Die scharfe Kante 17 dient als Auflage auf der Oberfläche der informationsfreien Seite der CD. Die Scharfkantigkeit wird dadurch erreicht, dass die untere Fläche 18 der Zentrierhilfe 9, 9' leicht hinterdreht ist. Die zusammengesetzte Zentrierhilfe 9, 9' weist eine konische Bohrung 21 auf, in die ein ebenfalls konischer Kegelstumpf 22 passgenau eingesetzt wird, so dass dieses Teil 22 bei Bedarf herausgenommen werden kann und als selbstständige kleinere Zentrierhilfe 9 verwendet wird. Im eingesetzten Zustand des konischen Teils 22 entspricht die Zentrierhilfe 9' genau derjenigen, die in Fig. 3 näher beschrieben wurde. Der größere Durchmesser D1 des Kegelstumpfs ist variabel zu wählen und reicht von 15 mm im Durchmesser bis 23 mm im Durchmesser. Der Zapfen 10 ist ebenfalls leicht konisch ausgebildet, so dass der Zapfen 10 im eingesetzten Zustand in das Zentralloch 11 der CD leicht klemmend mit dem Rand des Zentrallochs im Eingriff steht. Die Länge des Zapfens 10 sollte so gewählt werden, dass sie nicht über die maximale Stärke der CD hinausragt. Mit der Zentrierhilfe 9' ist es somit möglich, erfindungsgemäße Etiketten 1 auf die Rückseite der CD gemäß dem oben beschriebenen Verfahren aufzukleben, deren zentrales Loch 2 nur geringfügig größer als 15 mm ist, was dem Durchmesser des Zentrallochs 11 der CD entspricht. Mit einer derartigen Zentrierhilfe steht dem Anwender somit die gesamte Fläche einer Seite der CD zur Beschriftung oder Bemalung zur Verfügung.

## Patentansprüche

1. Scheibenförmiges rundes selbstklebendes Etikett (1) mit einem zentralen Loch (2), **dadurch gekenn-zeichnet, dass** der Außendurchmesser (D) des Etiketts (1) nicht größer als D = 117 mm ist und der Innendurchmesser (d) des zentralen Lochs (2) des Etiketts (1) geringfügig größer als 15 mm ist,

2. Scheibenförmiges rundes selbstklebendes Etikett nach Anspruch 1, **dadurch gekennzeichnet, dass** das Etikett (1') aus einem bestimmten hitzebeständigen, nicht schrumpfenden Material wie Polyester oder Papier gefertigt ist.

3. Scheibenförmiges rundes selbstklebendes Etikett nach Anspruch 1 und 2., **dadurch gekennzeich-net, dass** das Etikett (1) durchsichtig ist.

4. Scheibenförmiges rundes selbstklebendes Etikett nach Anspruch 1, **dadurch gekennzeichnet, dass** das Etikett (1)farblos ist.

5. Scheibenförmiges rundes selbstklebendes Etikett nach einem der vorangegangenen Ansprüche, **dadurch gekennzeichnet, dass** das Etikett (1) farbig und durchsichtig ist.

6. Scheibenförmiges rundes selbstklebendes Etikett nach einem der vorangegangenen Ansprüche, **dadurch gekennzeichnet, dass** die mehrschichtige Folie (1') vorgestanzt ist, so dass sich das aufzuklebende Etikett (1) in seiner endgültigen Form mühelos von der Trägerfolie (4) löst.

7. Scheibenförmiges rundes selbstklebendes Etikett nach einem der vorangegangenen Ansprüche, **dadurch gekennzeichnet, dass** das Etikett (1') an der Unterseite eine Klebeschicht (5) aufweist.

8. Scheibenförmiges rundes selbstklebendes Etikett nach einem der vorangegangenen Ansprüche, **dadurch gekennzeichnet, dass** die Klebeschicht (5) unter dem Etikett (1) säurefrei ist und keine aggressiven Stoffe beinhaltet.

9. Scheibenförmiges rundes selbstklebendes Etikett nach einem der vorangegangenen Ansprüche, **dadurch** geknnzeichnet, dass das Etikett (1) in einer mehrschichtigen.Folie (1') vorgestanzt wird und bei Gebrauch herausgenommen wird.

10. Scheibenförmiges rundes selbstklebendes Etikett nach einem der vorangegangenen Ansprüche, **dadurch gekennzeichnet, dass** die vorgestanzte mehrschichtige Folie (1') viereckig ist, wobei die Kantenlangenlänger länger als des äubere Durchmesser (D) des zu kennzeichnenden Informationträgers (3) sind.

11. Scheibenförmiges rundes selbstklebendes Etikett nach einem der vorangegangenen Ansprüche, **dadurch gekennzeichnet, dass** die Beschriftung (8) und/oder Bemalung des Etiketts (1) mit Hilfe eines Computerprogramms und einem geeigneten Drucker durchgeführt wird.

## Claims

1. Disk-shaped, round self-adhesive label (1) with a central hole (2), **characterized in that** the outer diameter (D) of the label (1) is not greater than D = 117 mm and the inner diameter (d) of the central hole (2) of the label (1) is slightly greater than 15 mm.

2. Disk-shaped, round self-adhesive label of claim 1, **characterized in that** the label (1) is made from a specific, heat-resistant, shrink-proof material such as polyester or paper.

3. Disk-shaped, round self-adhesive label of claim 1 or 2, **characterized in that** the label (1) is translucent.

4. Disk-shaped, round self-adhesive label of claim 1, **characterized in that** the label (1) is colorless.

5. Disk-shaped, round self-adhesive label of one of the preceding claims, **characterized in that** the label (1) is colored and translucent.

6. Disk-shaped, round self-adhesive label of one of the preceding claims, **characterized in that** the multi-layer film (1') is pre-cut, so that the label (1) to be adhered is released in its final shape without contact from the support film (4).

7. Disk-shaped, round self-adhesive label of one of the preceding claims, **characterized in that** the label (1) has an adhesive layer (5) on the lower surface.

8. Disk-shaped, round self-adhesive label of one of the preceding claims, **characterized in that** the adhesive layer (5) under the label (1) is acid-free and contains no aggressive materials.

9. Disk-shaped, round self-adhesive label of one of the preceding claims, **characterized in that** the label (1) is pre-cut into a multi-layer film (1') and is taken out upon use.

10. Disk-shaped, round self-adhesive label of one of the preceding claims, **characterized in that** the pre-cut, multi-layer film (1') is square, whereby the edge lengths are longer than the outer diameter (D) of the information carrier (3) to be designated.

11. Disk-shaped, round self-adhesive label of one of the preceding claims, **characterized in that** the writing (8) and/or artwork of the label (1) is performed with the aid of a computer program and a suitable printer.

## Revendications

1. Etiquette (1) ronde autocollante en forme de disque avec un trou central (2), **caractérisée en ce que** le diamètre extérieur (D) de l'étiquette (1) n'est pas supérieur à D = 117 mm et que le diamètre intérieur (d) du trou central (2) de l'étiquette (1) est légèrement supérieur à 15 mm.

2. Etiquette (1) ronde autocollante en forme de disque selon la revendication 1, **caractérisée en ce que** l'étiquette (1) est fabriquée dans un matériau déterminé, thermorésistant, non rétractile, comme le polyester ou le papier.

3. Etiquette (1) ronde autocollante en forme de disque selon la revendication 1 ou 2, **caractérisée en ce que** l'étiquette (1) est transparente.

4. Etiquette (1) ronde autocollante en forme de disque selon la revendication 1, **caractérisée en ce que** l'étiquette (1) est incolore.

5. Etiquette (1) ronde autocollante en forme de disque selon l'une quelconque des revendications précédentes, **caractérisée en ce que** l'étiquette (1) est colorée et transparente.

6. Etiquette (1) ronde autocollante en forme de disque selon l'une quelconque des revendications précédentes, **caractérisée en ce que** le film multicouches (1') est prédécoupé, pour que dans sa forme définitive, l'étiquette à coller se détache sans peine du film support (4).

7. Etiquette (1) ronde autocollante en forme de disque selon l'une quelconque des revendications précédentes, **caractérisée en ce que** l'étiquette (1) comporte une couche adhérente (5) sur sa face inférieure.

8. Etiquette (1) ronde autocollante en forme de disque selon l'une quelconque des revendications précédentes, **caractérisée en ce que** la couche adhérente (5) sous l'étiquette (1) est exempte d'acide et ne contient aucune substance agressive.

9. Etiquette (1) ronde autocollante en forme de disque selon l'une quelconque des revendications précédentes, **caractérisée en ce que** l'étiquette (1) est prédécoupée dans un film multicouches (1') et retirée en cas de besoin.

10. Etiquette (1) ronde autocollante en forme de disque selon l'une quelconque des revendications précédentes, **caractérisée en ce que** le film multicouches prédécoupé (1') est carré, la longueur des bords étant supérieure au diamètre (D) du support d'informations (3) devant être identifié.

11. Etiquette (1) ronde autocollante en forme de disque selon l'une quelconque des revendications précédentes, **caractérisée en ce que** l'inscription (8) et / ou la couleur sur l'étiquette (1) est effectuée à l'aide d'un programme informatique et d'une imprimante adaptée.
